# EUROPÄISCHE PATENTSCHRIFT

(11) **EP 2 420 847 B1**
(45) Veröffentlichungstag und Bekanntmachung des Hinweises auf die Patenterteilung: **20.07.2016**
(21) Anmeldenummer: 11165880.3
(22) Anmeldetag: 12.05.2011
(51) Int. Cl.: G01N 35/10, G01N 1/34

(54) **Probenaufbereitungssystem sowie ein Verfahren zur Bearbeitung einer Probe**
Sample preparation system and a method for processing a sample
Système de préparation d'échantillons et procédé de traitement d'un échantillon

(30) Priorität: 20.08.2010 DE 102010037084
(43) Veröffentlichungstag der Anmeldung: 22.02.2012
(73) Patentinhaber: LCTech GmbH, 84405 Dorfen (DE)
(72) Erfinder: Aulwurm, Uwe, 84149, Velden/Vils (DE); Baumann, Michael, 84405, Dorfen (DE)
(74) Vertreter: Tetzner, Michael

(56) Entgegenhaltungen:
- EP-A2- 1 177 029
- WO-A1-2008/055613
- WO-A1-2009/079661
- FR-A5- 2 148 705
- US-A1- 2009 227 006
- US-B1- 6 511 849

## Beschreibung

Die Erfindung betrifft ein Probenaufbereitungssystem sowie ein Verfahren zur Bearbeitung einer Probe mit einem solchen Probenaufbereitungssystem.

Aus der Praxis sind die unterschiedlichsten Systeme zur Aufbereitung von Proben bekannt. Sie verfügen über einen in x-, y- und z-Richtung verfahrbaren Transportmechanismus, der an einer ersten Halterung einen in z-Richtung verfahrbaren Probenaufnehmer zum Aufnehmen von Proben und an einer zweiten Halterung ein in z-Richtung verfahrbares Bearbeitungsgerät zur Bearbeitung von Proben haltert.

Der Probenaufnehmer wird beispielsweise durch einen Nadel gebildet und ermöglicht die Aufnahme einer Probe aus einem Probenbehältnis, welche dann zu einem Bearbeitungsgerät verfahren und dort aufgegeben wird. Das Bearbeitungsgerät kann mittels der zweiten Halterung aufgegriffen und mittels des Transportmechanismus zu einem gewünschten Ort transferiert werden. Üblicherweise werden in Trägern eine Vielzahl von Probenbehältnissen bereitgehalten, die nacheinander in der oben beschriebenen Art und Weise angefahren und bearbeitet werden müssen.

Die EP 1 177 029 A2 offenbart ein Probenaufbereitungssystem mit einem in x-, y-und z- Richtung verfahrbaren Transportmechanismus, der an einer ersten Halterung einen Probenaufnehmer in Form einer Nadel und an einer zweiten Halterung einen Filter zur Bearbeitung einer Probe aufweist, wobei der Probenaufnehmer über einer Verbindungsleitung mit dem Filter zum Fluidaustausch in Verbindung steht.

Der Erfindung liegt die Aufgabe zugrunde, ein Probenaufbereitungssystem sowie ein Verfahren zur Aufbereitung von Proben anzugeben, dass sich durch eine flexiblere und schnellere Handhabung auszeichnet.

Erfindungsgemäß wird diese Aufgabe durch die Merkmale der Ansprüche 1 und 9 gelöst.

Das erfindungsgemäße Probenaufbreitungssystem weist im Wesentlichen einen in x-, y- und z-Richtung verfahrbaren Transportmechanismus auf, der an einer ersten Halterung einen in z-Richtung verfahrbaren Probenaufnehmer zum Aufnehmen von Proben und an einer zweiten Halterung ein als Filter, Säule oder Kartusche ausgebildetes und in z-Richtung verfahrbares Bearbeitungsgerät zur Bearbeitung von Proben aufweist. Weiterhin sind ein Probenbehältnis und wenigstens ein Probenaufnahmebehältnis räumlich nebeneinander derart angeordnet, dass der Probenaufnehmer in z-Richtung über dem Probenbehältnis und das Bearbeitungsgerät gleichzeitig in z-Richtung über dem Probenaufnahmebehältnis angeordnet sind, wobei der Probenaufnehmer über wenigstens eine Verbindungsleitung mit dem Bearbeitungsgerät zum Fluidaustausch in Verbindung steht.

Unter dem Begriff "Fluidaustausch" ist jeglicher Austausch von gasförmigen oder flüssigen Proben gemeint. Durch die Verbindungsleitung zwischen Probenaufnehmer und Bearbeitungsgerät ist für den Transfer der Probe vom Probenaufnehmer zum Bearbeitungsgerät keine Verfahrbewegung des Transportsmechanismus erforderlich. Auf diese Weise gelangt die Probe sehr einfach und schnell in das Bearbeitungsgerät. Darüber hinaus wird der Transportmechanismus geschont. Weiterhin kann hierdurch verhindert werden, dass die zu transferierende Probe unbeabsichtigt über der Bearbeitungsebene des Transportmechanismus verschüttet wird und dadurch das System bzw. weitere Proben kontaminiert.

Beim erfindungsgemäßen Verfahren zur Bearbeitung einer Probe wird das oben beschrieben Probenaufbereitungssystem wie folgt verwendet:
- wenigstens ein Probenbehältnis und wenigstens ein Probenaufnahmebehältnis werden räumlich nebeneinander angeordnet,
- der Probenaufnehmer wird in z-Richtung über dem Probenbehältnisses und das Bearbeitungsgerät wird gleichzeitig in z-Richtung über dem Probenaufnahmebehältnis positioniert,
- der Probenaufnehmer entnimmt eine Probe aus dem Probenbehältnis und
- die entnommene Probe wird direkt über die Verbindungsleitung dem in z-Richtung verfahrbaren Bearbeitungsgerät zugeführt.

Das Probenaufbereitungssystem kann beispielsweise zur Probenvorbereitung für die Analytik von Lebens- und Futtermitteln, Umwelt- und pharmazeutischen Proben und dgl. eingesetzt werden.

Weitere Ausgestaltungen der Erfindung sind Gegenstand der Unteransprüche.

Bei dem Probenaufnehmer kann es sich beispielsweise um eine Nadel oder ein anderes Instrument handeln, mit dem eine Probe aufgenommen werden kann. Gemäß einer weiteren Ausgestaltung der Erfindung ist vorgesehen, dass das Bearbeitungsgerät über Verbindungsleitungen mit mehreren Fluidbehältern in Verbindung steht, die beispielsweise organische Lösungsmittel (wie z.B. Petrolether, n-Hexan) oder andere gasförmige oder flüssige Fluide enthalten, welche zur Vorbereitung des Bearbeitungsgerätes oder zur Aufbereitung der Probe benötigt werden. Die Fluidbehälter als auch der Probenaufnehmer stehen zweckmäßigerweise über einen Pumpmechanismus mit dem an die zweite Halterung angeschlossenen Bearbeitungsgerät in Verbindung.

Erfindungsgemäß sind das Probenbehältnis und das wenigstens eine Probenaufnahmebehältnis räumlich nebeneinander derart angeordnet, dass der Probenaufnehmer in z-Richtung über dem Probenbehältnis und das Bearbeitungsgerät gleichzeitig über dem Probenaufnahmebehältnis angeordnet sind. Auf diese Weise ist es möglich, eine Probe aus dem Probenbehältnis zu entnehmen, dem Bearbeitungsgerät über die Verbindungsleitung direkt zuzuführen, die Probe im Bearbeitungsgerät zu bearbeiten und dann in das Probenaufnahmebehältnis abzugeben, ohne dass der Probenaufnehmer oder das Bearbeitungsgerät verfahren werden müssen.

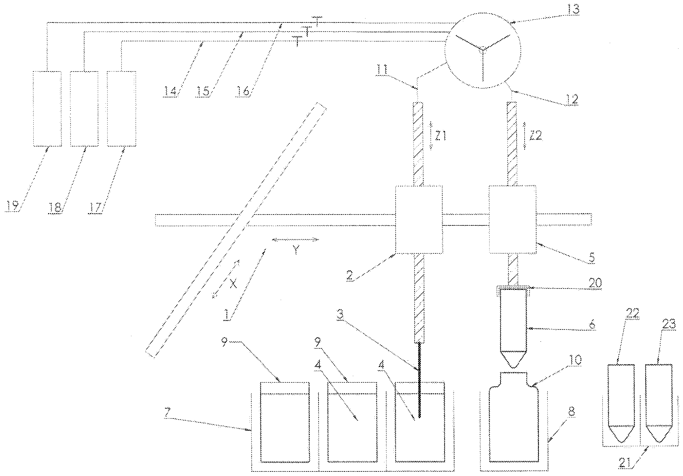

Weitere Vorteile und Ausgestaltungen der Erfindung werden im Folgenden anhand der Beschreibung und der Zeichnung näher erläutert.

In der Zeichnung ist das Probenaufbereitungssystem schematisch dargestellt.

Es besteht im Wesentlichen aus einem in x-, y- und z-Richtung verfahrbaren Transportmechanismus 1, der an einer ersten Halterung 2 einen in z-Richtung z₁ verfahrbaren Probenaufnehmer 3 zum Aufnehmen von Proben 4 und an einer zweiten Halterung 5, ein in z-Richtung z₂ verfahrbares Bearbeitungsgerät 6 zur Bearbeitung von Proben aufweist. Die zweite Halterung 5 kann auch an einem zweiten y-Arm des Transportmechanismus angebracht sein.

Der Probenaufnehmer 3 wird beispielsweise durch eine Nadel oder ein anderes Element zum Aufnehmen einer Probe gebildet. Beim Bearbeitungsgerät 6 handelt es sich um einen Filter, einer Säule oder eine Kartusche, die zur Bearbeitung von Proben geeignet ist. Das Probenaufbereitungssystem weist außerdem ein oder mehrere Träger 7, 8 auf, die jeweils ein oder mehrere Objekte, wie Probenbehältnisse 9 und Probenaufnahmebehältnisse 10 aufnehmen. Die Träger sind beispielsweise nebeneinander an einer Schiene befestigt oder werden an vorgegebenen Positionen auf einer Plattform abgestellt. Die in den Trägern 7, 8 angeordneten Objekte können vom Probennehmer 3 bzw. dem Bearbeitungsgerät 6 angefahren werden, um dort eine Proben 4 zu entnehmen oder abzugeben. Bei den Proben 4 handelt es sich beispielsweise um flüssige oder feste Stoffe.

Der Probenaufnehmer 3 steht über Verbindungsleitungen 11, 12 mit dem Bearbeitungsgerät 6 derart in Verbindung, dass eine vom Probenaufnehmer 3 aufgenommene Probe 4 über die Verbindungsleitungen 11, 12 in das Bearbeitungsgerät 6 transferiert werden kann, wobei zwischen den Leitungen 11 und 12 ein Pumpmechanismus 13 zwischengeschaltet ist. Das Bearbeitungsgerät 6 und der Probenaufnehmer 3 stehen weiterhin über Verbindungsleitungen 14, 15, 16 mit mehreren Fluidbehältern 17, 18 und 19 in Verbindung, wobei die Verbindungsleitungen 14, 15, 16 und die Verbindungsleitung 11 an entsprechenden Anschlüssen des Pumpmechanismus 13 und die mit dem Bearbeitungsgerät 6 direkt in Verbindung stehende Verbindungsleitung 12 an einem weiteren Anschluss des Pumpmechanismus 13 angekoppelt sind.

In den Fluidbehältern 17 bis 19 sind Fluids aufgenommen, welche für die Vorbereitung des Bearbeitungsgerätes 6 und/oder zur Bearbeitung der Probe erforderlich sind. Sie können beispielsweise organische Lösungsmittel, wie z. B. Petrolether, n-Hexan, oder andere flüssige oder gasförmige Fluide enthalten.

Die zweite Halterung 5 weist einen geeigneten Greifer 20 auf mit dem aus einem Träger 21 das benötigte Bearbeitungsgerät 6, 22 oder 23 gegriffen werden kann. Ein ebenfalls vorgesehener, nicht näher dargestellter Dichtmechanismus gewährleistet eine gas- und/oder flüssigkeitsdichte Verbindung zwischen Bearbeitungsgerät und Verbindungsleitung 12.

Die Bearbeitung einer Probe wird im Folgenden exemplarisch am Beispiel der Methode zur Bestimmung des Kohlenwasserstoff-Index in Wasser erläutert:
Hierzu nehmen wir an, dass sich im Probenbehältnis 9 50ml organisches Lösungsmittel (wie z. B. Petrolether, n-Hexan) befinden, in dem eine extrahierte Probe gelöst ist. In unmittelbarer Nähe befindet sich ein Probenaufnahmebehältnis 10. Über den Transportmechanismus wird zunächst der Träger 21 angefahren und das Bearbeitungsgerät 6 mit dem Greifer 20 entnommen, wobei das Bearbeitungsgerät 6 über den nicht näher dargestellten Dichtmechanismus gas- und/oder flüssigkeitsdicht abgedichtet wird. Nun fährt der Transportmechanismus 1 zur gewünschten Bearbeitungsposition, in der sich der Probenaufnehmer in z-Richtung über dem Probenbehältnis 9 mit der zu untersuchenden Probe 4 befindet.

Gleichzeitig wird das Bearbeitungsgerät 6 in z-Richtung oberhalb des Probenaufnahmebehältnisses 10 positioniert. Beim Bearbeitungsgerät 6 handelt es sich in diesem Fall um eine Kartusche mit Florisil/Natriumsulfat als Füllmaterial.

Anschließend fährt der Transportmechanismus 1 den Probenaufnehmer 3 in das Probenbehältnis 9 um die Probe 4 anzusaugen. Die vom Probenaufnehmer 3 aufgenommene Probe 4 wird nun mittels des Pumpmechanismus 13 über die Verbindungsleitungen 11 und 12 in das Bearbeitungsgerät 6 geleitet, wo die Probe von Störstoffen befreit wird. Die so gereinigte Probe wird vom Bearbeitungsgerät 6 in das Probenaufnahmebehältnis 10 abgegeben. Anschließend wird über den Pumpmechanismus 5 bis 10ml sauberes Lösungsmittel aus einem der Fluidbehälter 17 bis 19 in den Probenbehälter 9 zur Spülung transferiert, welches dann über den Probenaufnehmer 3 mittels dem Pumpmechanismus 13 abgesaugt und direkt über das Bearbeitungsgerät 6 in das Probenaufnahmebehältnis 10 eingeleitet wird. Dieser Vorgang wird ein weiteres Mal wiederholt. Anschließend kann das Bearbeitungsgerät 6 mit Stickstoff getrocknet werden. Die Probe ist nun vollständig gereinigt und befindet sich zur weiteren Bearbeitung mit einem Volumen von 60 bis 70ml im Probenaufnahmebehältnis 10.

Das gebrauchte Bearbeitungsgerät wird in den Träger 21 zurückgesetzt. Das Probenaufbereitungssystem spült nun über eine spezielle Spüleinrichtung den Probenaufnehmer 3, wie auch die zweite Halterung 5 mit dem Greifer 20 mittels sauberem Lösungsmittel, das über den Pumpmechanismus 13 zugeführt wird. Dazu werden der Probenaufnehmer und die zweite Halterung 5 über einen entsprechenden Auffangbehälter gefahren, der die Spülflüssigkeit auffängt. Das Probenaufnahmesystems ist dann zur Bearbeitung der nächsten Probe nach dem gleichen oder einem anderen Ablaufsschema bereit.

Dadurch dass der Probenaufnehmer 3 und das Bearbeitungsgerät 6 über die Leitung 11, den Pumpmechanismus 13 und die Leitung 12 direkt miteinander zum Fluidaustausch in Verbindung stehen, kann eine Probe 4 aus einem Probenbehältnis 9 aufgenommen, in das Bearbeitungsgerät 6 transferiert und von dort in ein Probenaufnahmebehältnis 10 abgegeben werden, ohne dass der Probenaufnehmer 3 oder das Bearbeitungsgerät 6 durch den Transportmechanismus 1 bewegt werden müssen. Hierdurch wird die Zeit eingespart, die der Transportmechanismus ansonsten für die Bewegung benötigen würde. Außerdem wird verhindert, dass das zu transportierende Medium unbeabsichtigt über der Bearbeitungsebene des Transportmechanismus verschüttet wird und dadurch das System bzw. weitere Proben kontaminiert werden. Außerdem ist durch die räumliche Nähe von Probenbehältnis 9 und Probenaufnahmebehältnis 10 eine direkte Zuordnung von Ausgangs- und Endprobe möglich.

Das Probenaufbereitungssystem kann aber unabhängig hiervon auch "klassisch" benutzt werden, d. h. eine Probe wird aus einem Probenbehältnis mittels des Probenaufnehmers 3 am Ort X entnommen und zum Ort Y transferiert und dort mittels eines Bearbeitungsgerätes bearbeitet.

Ein weiterer Vorteil des oben beschriebenen Probenaufbereitungssystem besteht darin, dass das Bearbeitungsgerät 6 über die Verbindungsleitungen 14, 15, 16 von "hinten" mit einer beliebigen Anzahl an Flüssigkeiten oder Gases durchströmt werden kann. Dies bedeutet, dass diese Flüssigkeiten nicht im Abdeckungsbereich des Transportmechanismus bereitgehalten werden müssen, sodass dort mehr Raum für Bearbeitungsgeräte und Probenbehältnisse bzw. Probenaufnahmebehältnisse zur Verfügung steht.

Der Probenaufnehmer 3 und das Bearbeitungsgerät 6 können über den Transportmechanismus in jede Position gefahren werden, wo das Bearbeitungsgerät 6 wahlweise von vorne oder von hinten über die Verbindungsleitungen 14, 15 oder 16 beaufschlagt werden kann.

Das Bearbeitungsgerät 6 kann auch so ausgebildet sein, dass es nicht nur eine Probe abgeben, sondern auch eine Probe aufnehmen kann, indem das Bearbeitungsgerät 6 in ein Probenbehältnis 9 gefahren wird und dort die Probe 4 von vorne ansaugt und dann an anderer Stelle nach vorne wieder abgegeben wird. Auf diese Weise wird die Probe 4 zweimal über das Bearbeitungsgerät 6, bei dem es sich beispielsweise um eine Kartusche handelt, geleitet.

## Patentansprüche

1. Probenaufbereitungssystem mit einem in x-, y- und z-Richtung verfahrbaren Transportmechanismus (1), der an einer ersten Halterung (2) einen in z-Richtung verfahrbaren Probenaufnehmer (3) zum Aufnehmen von Proben (4) und an einer zweiten Halterung (5) ein in z-Richtung verfahrbares, als Filter, Säule oder Kartusche ausgebildetes Bearbeitungsgerät (6) zur Bearbeitung von Proben aufweist und der Probenaufnehmer (3) über wenigstens eine Verbindungsleitung (11, 12) mit dem Bearbeitungsgerät (6) zum Fluidaustausch in Verbindung steht, **dadurch gekennzeichnet, dass**
wenigstens ein Probenbehältnis (9) und wenigstens ein Probenaufnahmebehältnis (10) räumlich nebeneinander derart angeordnet sind, dass der Probenaufnehmer (3) in z-Richtung über dem Probenbehältnis (9) und das Bearbeitungsgerät (6) gleichzeitig in z-Richtung über dem Probenaufnahmebehältnis (10) angeordnet sind.

2. Probenaufbereitungssystem nach Anspruch 1, **dadurch gekennzeichnet, dass** es sich bei dem Probenaufnehmer (3) um eine Nadel handelt.

3. Probenaufbereitungssystem nach Anspruch 1, **dadurch gekennzeichnet, dass** das Bearbeitungsgerät (6) über Verbindungsleitungen (14,15,16) mit mehreren Fluidbehältern (17,18,19) in Verbindung steht.

4. Probenaufbereitungssystem nach Anspruch 3 , **dadurch gekennzeichnet, dass** die Fluidbehälter über einen Pumpmechanismus (13) mit dem Bearbeitungsgerät (6) in Verbindung stehen.

5. Probenaufbereitungssystem nach Anspruch 1, **dadurch gekennzeichnet, dass** der Probenaufnehmer über einen Pumpmechanismus (13) mit dem Bearbeitungsgerät (6) in Verbindung steht.

6. Probenaufbereitungssystem nach Anspruch 1, **dadurch gekennzeichnet, dass** die zweite Halterung (5) einen Greifer (20) zum Greifen des Bearbeitungsgeräts (6, 22, 23) aufweist.

7. Probenaufbereitungssystem nach Anspruch 1, **dadurch gekennzeichnet, dass** wenigstens ein Träger (7,8) vorgesehen ist, in dem ein oder mehrere Probenbehältnisses (9) und/oder Probenaufnahmebehältnisse (10) gehaltert sind.

8. Verfahren zur Bearbeitung einer Probe mit einem Probenaufbereitungssystem gemäß einem oder mehreren der vorhergehenden Ansprüche, wobei
- wenigstens ein Probenbehältnis und wenigstens ein Probenaufnahmebehältnis räumlich nebeneinander angeordnet werden,
- der Probenaufnehmer in z-Richtung über dem Probenbehältnis und das Bearbeitungsgerät gleichzeitig in z-Richtung über dem Probenaufnahmebehältnis positioniert werden,
- der Probenaufnehmer eine Probe aus dem Probenbehältnis entnimmt und
- die entnommene Probe direkt über die Verbindungsleitung dem in z-Richtung verfahrbaren Bearbeitungsgerät zuführt.

## Claims

1. A sample preparation system having a transport mechanism (1) movable in the x, y and z directions, which at a first retaining fixture (2) has a sampler (3) for taking up samples (4) that is movable in the z direction and at a second retaining fixture (5) has a processing apparatus (6) in form of a filter, a column or a cartridge for processing samples that is movable in the z direction and wherein the sampler (3) is connected via at least one connecting line (11, 12) to the processing apparatus (6) for fluid exchange,
**characterised in that** at least one sample vessel (9) and at least one sample-receiving container (10) are arranged spatially adjacent in such a way that the sampler (3) is arranged in the z direction above the sample vessel (9) and the processing apparatus (6) is arranged simultaneously above the sample-receiving container (10).

2. A sample preparation system according to claim 1, **characterised in that** the sampler (3) is a needle.

3. A sample preparation system according to claim 1, **characterised in that** the processing apparatus (6) is connected to a plurality of fluid containers (17, 18, 19) via connecting lines (14, 15, 16).

4. A sample preparation system according to claim 3, **characterised in that** the fluid containers are connected to the processing apparatus (6) via a pump mechanism (13).

5. A sample preparation system according to claim 1, **characterised in that** the sampler is connected to the processing apparatus (6) via a pump mechanism (13).

6. A sample preparation system according to claim 1, **characterised in that** the second retaining fixture (5) has a gripper (20) for gripping the processing apparatus (6, 22, 23).

7. A sample preparation system according to claim 1, **characterised in that** at least one support (7, 8) is provided, in which one or more sample vessels (9) and/or sample-receiving containers (10) are mounted.

8. A method for processing a sample using a sample preparation system according to one or more of the preceding claims, in which
- at least one sample vessel and at least one sample-receiving container are arranged spatially adjacent
- the sampler is positioned in the z direction above the sample vessel and the processing apparatus is simultaneously positioned in the z direction above the sample-receiving container,
- the sampler removes a sample from the sample vessel, and
- the removed sample is supplied directly via the connecting line to the processing apparatus which is movable in the z direction.

## Revendications

1. Système de préparation d'échantillons, avec un mécanisme de transport (1), qui, pouvant être déplacé dans les directions x, y et z, est doté, sur un premier support (2), d'un échantillonneur (3), qui peut être déplacé dans la direction z pour la prise d'échantillons (4) et, sur un deuxième support (5), d'un dispositif de traitement d'échantillons (6), qui, réalisé en forme de filtre, de colonne ou de cartouche, peut être déplacé dans la direction z, et sachant que, pour l'échange de fluide, l'échantillonneur (3) est en communication avec le dispositif de traitement (6) par l'intermédiaire d'au moins une conduite de liaison (11, 12),
**caractérisé en ce que** sont disposés, l'un à côté de l'autre, au moins un conteneur d'échantillons (9) et au moins un conteneur de prise d'échantillons (10) de telle manière que l'échantillonneur (3) soit placé au-dessus du conteneur d'échantillons (9), dans la direction z, et que, simultanément, le dispositif de traitement (6) soit disposé au-dessus du conteneur de réception d'échantillons (10), dans la direction z.

2. Système de préparation d'échantillons selon la revendication 1,
**caractérisé en ce que** l'échantillonneur (3) est une aiguille.

3. Système de préparation d'échantillons selon la revendication 1,
**caractérisé en ce que** le dispositif de traitement (6) est en communication avec plusieurs conteneurs de fluide (17, 18, 19) par l'intermédiaire de conduite de liaison (14, 15, 16).

4. Système de préparation d'échantillons selon la revendication 3,
**caractérisé en ce que** les conteneurs de fluide sont en communication avec le dispositif de traitement (6) par l'intermédiaire d'un mécanisme de pompage (13).

5. Système de préparation d'échantillons selon la revendication 1,
**caractérisé en ce que** l'échantillonneur est en communication avec le dispositif de traitement (6) par l'intermédiaire d'un mécanisme de pompage (13).

6. Système de préparation d'échantillons selon la revendication 1,
**caractérisé en ce que** le deuxième support (5) est doté d'un grappin (20) qui est destiné à saisir le dispositif de traitement (6, 22, 23).

7. Système de préparation d'échantillons selon la revendication 1,
**caractérisé en ce que** l'on prévoit au moins un support (7, 8), dans lequel sont maintenus un ou plusieurs conteneur / s d'échantillons (9) et / ou des conteneurs de réception d'échantillons (10).

8. Procédé de traitement d'un échantillon avec un système de préparation d'échantillons selon l'une ou plusieurs des revendications précédentes sachant que
- au moins un conteneur d'échantillons et au moins un conteneur de réception d'échantillons (10) sont disposés l'un à côté de l'autre,
- simultanément, l'échantillonneur peut être positionné, dans la direction z, au-dessus du conteneur d'échantillons, et le dispositif de traitement peut être positionné, simultanément, dans la direction z, au-dessus du conteneur de réception d'échantillons,
- l'échantillonneur prélève un échantillon du conteneur d'échantillons, et
- l'échantillon prélevé est directement conduit au dispositif de traitement, déplaçable dans la direction z, par l'intermédiaire d'une conduite de liaison.
